# EUROPEAN PATENT APPLICATION

(11) **EP 2 977 950 A1**
(43) Date of publication of application: **27.01.2016**
(21) Application number: 15178363.6
(22) Date of filing: 24.07.2015
(51) Int. Cl.: G06Q 30/06, G06Q 30/02, G06Q 20/32, G06Q 50/00

(54) **MOBILE COMMERCE THROUGH MOBILE COMMUNICATION DEVICES AND SOCIAL NETWORKS**

(30) Priority: 25.07.2014 WO PCT/CN2014/083021
(71) Applicant: ZTE Corporation, Shenzhen 518057 (CN)
(72) Inventor: Li, Shiping, Shanghai 201203 (CN)
(74) Representative: Potter Clarkson LLP

(57) **Abstract**

The disclosed techniques allow for mobile commerce conducted by mobile terminals through social network channel to distribute sales and marketing data to the buyer. In one aspect, a method of mobile commerce includes displaying sales and marketing data on a mobile terminal, wherein the data is received from a server, updating sales and marketing data on the mobile terminal, sending the updated sales and marketing data to the server, and distributing access information for the sales and marketing data to a social network. In another aspect, a method of mobile commerce includes storing sales and market data in a server, sending sales and market data to a mobile terminal, receiving update of the sales and marketing data from the mobile terminal, providing sales and marketing data to a buyer, and receiving an order from a buyer.

## Description

### CROSS REFERENCE TO RELATED APPLICATIONS

This patent document claims the benefit of priority under 35 U.S.C. §119(a) and the Paris Convention of International Patent Application No. PCT/CN2014/083021, filed on July 25, 2014. The entire content of the before-mentioned patent application is incorporated by reference herein.

### TECHNICAL FIELD

This patent document relates to systems, devices, methods, and processes for ecommerce and mobile commerce including techniques for facilitating the use of a mobile communication device to conduct mobile commerce transactions.

### BACKGROUND

Marketing and sales of goods or services can be conducted via communication networks such as the Internet and other networks. Marketing and sales via portable communication devices and mobile communication devices, such as smartphones, feature phones, tablet computers, various handheld communication devices and others, constitute an important part of ecommerce. A portable or mobile computing device has an operating system (OS), and can run various application software or apps to provide a wide range of functionalities. Many portable or mobile communication devices may be equipped with various communication capabilities, including mobile network communications such as the Long Term Evolution (LTE), Wi-Fi, Bluetooth, radio frequency (RF) near-field communications, and GPS capabilities that can allow connections to mobile communication networks, local networks, or other wireless devices or systems (e.g., another phone, an automobile communication system or a microphone headset).

### SUMMARY

This patent document relates to, in one aspect, systems, devices, methods and processes for electronic commerce, Internet commerce, or mobile commerce enabling users and customers, using mobile terminals or devices, to conduct marketing and sales operations through social network channels and social network applications, such as mobile messaging in social networks.

In another aspect, a system for providing mobile commerce is described to include a communication network to provide mobile communications and a seller mobile device operable in the communication network and including a seller sales administration module that manages information on products or services offered for sale and information on marketing and advertisement of the offered products or services. The seller sales administration module is configured to deliver, directly or otherwise, through the communication network, marketing and advertisement of the products or services to mobile users via a social network service or a mobile messaging service. The system includes one or more servers in the communication network which are configured to include a server sales administration module for managing sales, including storing information on the products or services offered for sale, processing sale transactions, managing buyer registration and authentication, and processing buyer payments. A customer or buyer mobile device is operable in the communication network to receive marketing and advertisement of the products or services from the seller mobile device via the social network service or the mobile messaging service. The customer mobile device is operable to place an order and make an payment for the placed order in interaction with the server sales administration module.

In yet another aspect, a system is provided to interface with product supplier databases or websites to push product ads to mobile phones and conducts sale transactions for mobile users based on mobile messaging via mobile communication channels.

In yet another aspect, a method to conduct mobile commerce is disclosed. The method allows sellers to display and market products, and customer to purchase products using mobile terminals through social network channels such as mobile messaging. The method includes downloading to the seller device a client/seller sales administration module and a client/seller user interface module from a server, seller registering an account managed by a server support module, displaying data about sales, customers, orders, and other business data in the seller user interface module, the seller user interface being in sync with, or mirroring the information in, the server sales administration software, i.e., matching the information in the server, updating through the client user interface merchandise catalog information in the client sales administration software, sending the updated information to the server support module, and distributing, through hyperlinks or otherwise, sales and marketing information to social network sites, user groups, and other online websites.

In yet another aspect, a method for conducting mobile commerce is disclosed. The method allows a buyer to access hyperlinks distributed by a seller to social network websites to access the merchandise, explore the products, make inquiries, order, and pay for the products ordered. The actions by the buyer, such as making inquiries, ordering, and payment, is communicated to a server sales administration software residing on the server and further stored in a database.

In yet another aspect, a method for conducting mobile commerce is disclosed. The method allows a server sales administration software to receive orders from buyers, verify payments from the buyers, and then facilitates order fulfillment, e.g., by providing a message to the seller so that a human operator can fulfill the order. The method also allows the server sales administration software to send updated information stored in a database to be displayed in a client user interface for the client sales administration software. The method further allows the server sales administration software to receives updated information sent by a client through the client sales administration software.

In yet another aspect, a method for mobile commerce is disclosed. The method allows the seller to download to the seller device a client sales administration module and a client user interface module from a server, to register an account managed by a server support module in the server, to display, in the seller user interface module, sales and marketing information from a server sales administration module in the server; to update sales and marketing information in the client sales administration module through the client user interface module; and to distribute links to the sales and marketing information to social networking sites. The sales and marketing information may optionally be generated from the client user interface module and sent to the server. Alternatively, the sales and marketing information may be sent from the server to the seller device, updated in the seller user interface module, and optionally sent back to the server.

In some exemplary embodiments the seller device alone would be a mobile device, in some other embodiments the seller device and the buyer device would be both mobile devices, and in yet other embodiments only the buyer device would be a mobile device.

In another aspect, a disclosed method and system for mobile commerce includes capturing a photo or a video of an item for sale, rent, or donation using a seller device; using a pre-installed module in the seller device to edit the photo or the video and to add listing information; communicating, through a mobile communication network, the item listing, which includes the photo and video plus the listing information, to a social networking site or an online ecommerce website; and receiving on the seller device actions related to the listing from users of the social networking site or the online ecommerce website, such actions including, for example, questions, orders, or comments about the listing.

In some exemplary embodiments of the disclosed technology, a module or modules in the seller device could automatically identify the captured image or video or the image or video in the seller device's storage, automatically associate it with similar items in social networking sites or in online ecommerce websites, automatically extract listing information from the similar items and append it to the item, and optionally automatically list the item to a social networking site or an online ecommerce website at a pre-determined percentage discount from the price of the similar items.

Those and other aspects of the disclosed technology and their implementations are described in greater detail in the drawings, description and the claims.

### BRIEF DESCRIPTION OF THE DRAWINGS

FIG. 1 shows an illustrative diagram of an exemplary mobile commerce system and its components residing on client, server , and customer devices and communicating through a communication network.
FIG. 2 shows an illustrative diagram of exemplary communication processes between the client and the server.
FIG. 3 shows an illustrative diagram of an exemplary mobile ecommerce system including the client, the server, and the customer devices communicating through a communication network.
FIG. 4 shows a flow diagram of an exemplary process for sales and marketing using mobile devices through social network in mobile commerce.
FIG. 5 illustrates a potential communication between the seller sales administration module in the seller device, the server sales administration module in the server, and the buyer device.
FIG. 6 illustrates an exemplary flow of sales and marketing data between the seller device, the buyer device, and the server.
FIG. 7 illustrates an exemplary interaction between the server, the client or seller device and the buyer device.
FIG. 8 illustrates an exemplary flow of seller registration.
FIG. 9 illustrates an exemplary process for listing items for sale on social networking sites and online ecommerce websites.
FIG. 10 illustrates an exemplary mobile commerce system include a seller mobile device, buyer in social network site, server with internal or external database, and communication network.

### DETAILED DESCRIPTION

The disclosed technology can be used to provide a convenient way for a seller to launch flexible, dynamic, customized, targeted and effective marketing campaigns and sales of goods or services to buyers via their mobile devices such as mobile phones or tablets. The disclosed technology can be implemented so as to enable a seller to conveniently manage the offering of products or services for sale and to manage the advertisement or marketing of the offered products or services via social network services or mobile messaging services. Through the disclosed technology, sellers can sell and market goods and services directly to buyers ("direct marketing") without a third party middle layer. As such, the disclosed technology benefits both the buyers and sellers by reducing the cost of doing business and improving the overall efficiency in ecommerce.

Social networking is a web-based service that allows individuals to create public profiles, create lists of users with whom to share connections, and view and cross the connections within the system. Most social network services are web-based and provide means for users to interact over the Internet, through such means as e-mail and instant messaging. Social network sites are varied, incorporating new information and communication tools such as, mobile connectivity, photo and video sharing, and blogging. Social network sites allow users to share ideas, pictures, posts, activities, events, and interests with people in their network.

The rapid growth in mobile devices, wireless internet, and social networking has made mobile devices an indispensable tool for accessing social network sites, and for communicating with people. The growth of mobile devices and social network provides new opportunities for consumers and merchants alike. Many current ecommerce merchants are still using websites based on non-mobile devices such as personal desktop computers, which may not fit the needs of mobile users. Moreover, the sale of products or services is often made through third party ecommerce websites without much direct interaction between the sellers and the buyers, thereby adding to the cost of doing business. There is a need to facilitate mobile commerce using mobile devices or terminals allowing for sales and marketing through social network channels.

Throughout this disclosure reference to product or merchandise or items includes both goods or services. Consumers, buyers, and customers are used interchangeable throughout this disclosure. Module and software are likewise used interchangeably as in Client User Interface Module or Client User Interface Software; Client Sales Administration Module or Client Sales Administration Software; Server Support Module or Server Support Software; or Server Sales Administration Module or Server Sales Administration Software. The seller device is also interchangeably referred to as the client device. Mobile terminals and mobile devices are likewise used interchangeably. Furthermore, the adjective "exemplary" is used in the sense of "an example of' and may or may not represent "ideal" or "preferred" way of implementing the corresponding described feature.

The disclosed technology includes systems and methods to conduct mobile commerce. In one aspect, a method is provided to enable sellers to display and market products or services, and to allow customers to purchase products or services using mobile terminals through social network channels such as mobile messaging. An exemplary implementation includes downloading client sales administration software from a server; registering an account managed by the server support software; displaying information about sales, customers, orders, and other business data, mirroring information in the server sale administration software, i.e., matching the information in the server; updating merchandise catalog, sales, and marketing information in the client sales administration software through the client user interface; and distributing, through hyperlinks or otherwise, sales and marketing information to social network sites, user groups, and other online websites. In some exemplary embodiments, the sales and marketing information is about sales volume, pricing, orders, and order status.

In another aspect, a method for conducting mobile commerce is disclosed. The method allows a buyer to access hyperlinks, or other access information or content links accessible by a web browser, distributed by a seller to social network sites to access the merchandise, explore the products or services offered for rent or sale, make inquiries, order, and pay for the products or services ordered. The actions by the buyer, such as submitting inquiries, placing orders, and making payments are communicated to the Server Sales Administration software residing on the server or servers.

In yet another aspect, a method for conducting mobile commerce allows the Server Sales Administration software to receive orders from buyers, verify the payment, and then facilitates order fulfillment, e.g., by providing a message to the seller so that a human operator can fulfill the order. The Server Sales Administration software sends updated information stored in a database to the Client User Interface on a client mobile device for display. The Server Sales Administration software also receives updated information sent by the Seller/Client Sales Administration software on a seller/client device.

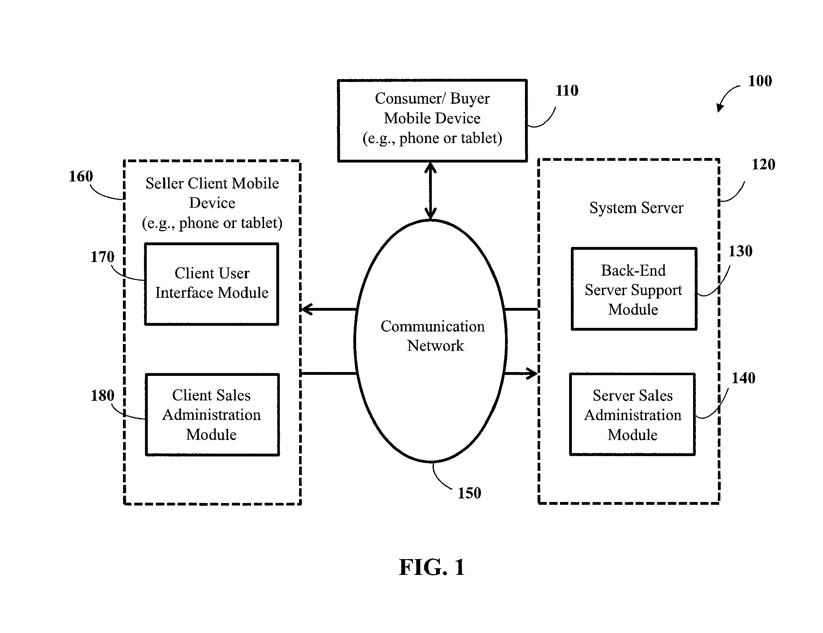

FIG. 1 shows an illustrative diagram of an exemplary mobile commerce system 100 and its components residing on a seller client mobile device 160, and a server 120. This mobile commerce system includes a seller client mobile device 160 that has a Client User Interface Module 170, and a Client Sales Administration Module 180. The seller client mobile device can be in various device configurations, such as a mobile phone, a tablet, or any other form of a mobile communication device. The system server 120, which may include one or more servers or computers, is provided to include a Server Sales Administration Module 140 and a Backend Server Support Module 130. A communication network 150, such as a mobile broadband wireless network , for example an LTE network, or a Wi-Fi network, enables communication between the seller client mobile device 160 and the system server 120. In addition, a consumer or buyer device 110, such as a mobile phone or tablet, can be connected to the communication network 150 such that the consumer or buyer can purchase goods or services or receive advertisements provided by the seller client mobile device and the system server. For example, the consumer or buyer device can obtain the product or service information offered for sale via a social network or various other mobile communication or messaging services including but not limited to, WeChat, Line, Facebook, WhatsApp, Kakao Talk, Snapchat, Weibo, Skype, or iMessage.

The client mobile device may be a mobile terminal used by a seller, while the system server may be a machine connected to the client through the communication network. Whereas FIG. 1 shows the client mobile device and the system server as two separate and distinct system, in some implementations, the client mobile device and the system server may reside on one physical machine or system. In some other implementations, the client device may be a desktop computer or other computing or communication devices that communicate with the system server to provide the mobile-accessible service for selling goods or services to a buyer on a mobile computing device.

The four software modules for the client device and server shown in FIG. 1 can be implemented in various configurations. For example, there may be only one module at the client side to embody the functions of the Client User Interface Module 170 and a Client Sales Administration Module 180 as shown in FIG. 1 and only one module at the server side to embody the functions of the Server Sales Administration Module 140 and the Backend Server Support Module 130 as shown in FIG. 1. In other implementations, there may be two or more modules at the client side to provide the desired client functions, or two or more modules at the server side to provide the desired server functions.

In one exemplary embodiment, the seller client mobile device is a mobile phone. A mobile phone may be pre-installed with the Client User Interface Module 170 and the Client Sales Administration Module 180 as shown in FIG. 1 such that the mobile phone is ready for a seller to conduct marketing and sales operations. Often, a mobile phone would not be pre-installed with the Client User Interface Module 170 and the Client Sales Administration Module as shown in FIG. 1 and thus the owner of the mobile phone would need to first download and install the Client Sales Administration Module and the Client User Interface Module 170 from the system server. The Client User Interface module may be downloaded to the client from the server by the user, and may be configured by the Server Support Module 130. The Client User Interface Module 170 enables the user to view information stored in a database maintained by or accessible from the Server Support Module 130, and may also allow the user to register for an account. The Client User Interface Module 170 may further allow the user to input and update merchandise information stored in the database maintained or accessible by the Server Support Module. The Client User Interface Module 170 may be customizable by the client.

The Client Sales Administration Module 180 may be downloaded to the client device from the server by the seller/ user. User information for the account registration may be sent by the Client Sales Administration Module 180 to the Server Support Module 130 to register an account managed by the Server Support Module. The Client Sales Administration Module 180 may also update merchandise catalog, sales, and marketing information, mirroring information in the server sale administration software, i.e., matching the information in the server, and distributing, through hyperlinks or otherwise, sales and marketing information to social network sites, user groups, and other online websites.

In some embodiments, the above described modules may be implemented as downloadable software modules. In such embodiments, the downloading of the client software may be offered in different ways to mobile users. For example, the software may be made available in a mobile app store or site, or the software may be available from a website such as a phone manufacturer's website or a mobile service provider's website, among other ways of providing suitable downloading of the client software to the client device.

The Server Sales Administration module 140 may be configured to provide a number of sales administration or management functions. For example, the Server Sales Administration module or software may receive merchandises catalog, sales, and marketing information from the client device. The Server Sales Administration module 140 may also receive orders from a customer or buyer, verify the payment by the buyer, and then facilitates order fulfillment, e.g., by providing a message to the seller client device so that a human operator can fulfill the order. In some embodiments, the client device may be able to fulfil orders without human intervention. For example, a buyer may purchase viewing rights to images or video stored on the seller client mobile device, which the device may automatically, e.g., without human intervention, make available to the buyer. The Server Sales Administration module 140 may also send information stored in a database to the client device to be displayed on the Client User Interface on the seller client mobile device. The server sales administration module 140 may also send data to be stored in a database in the server or elsewhere as specified by the server support software. Additional functionality may also be implemented in the Server Sales Administration module 140 as needed.

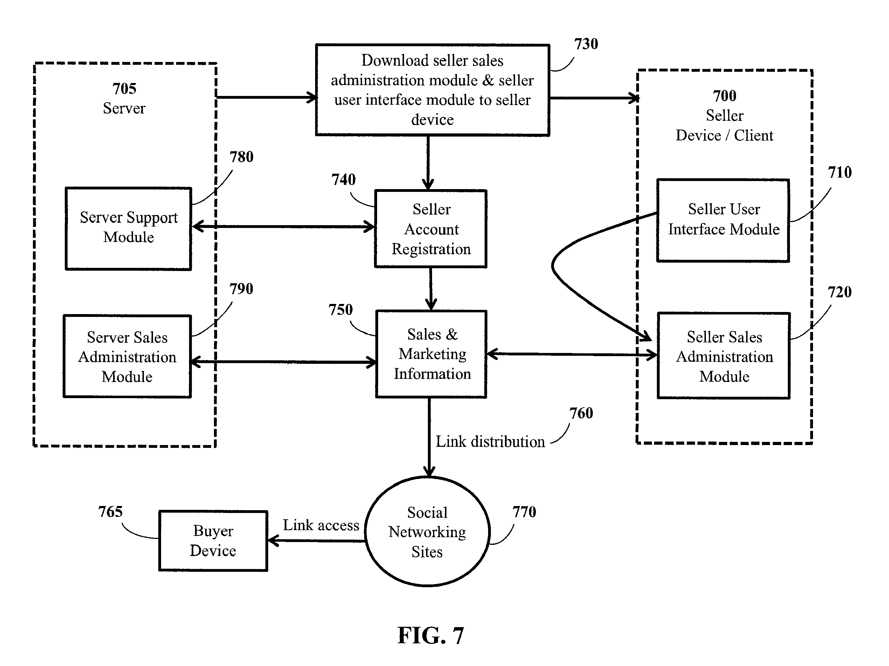

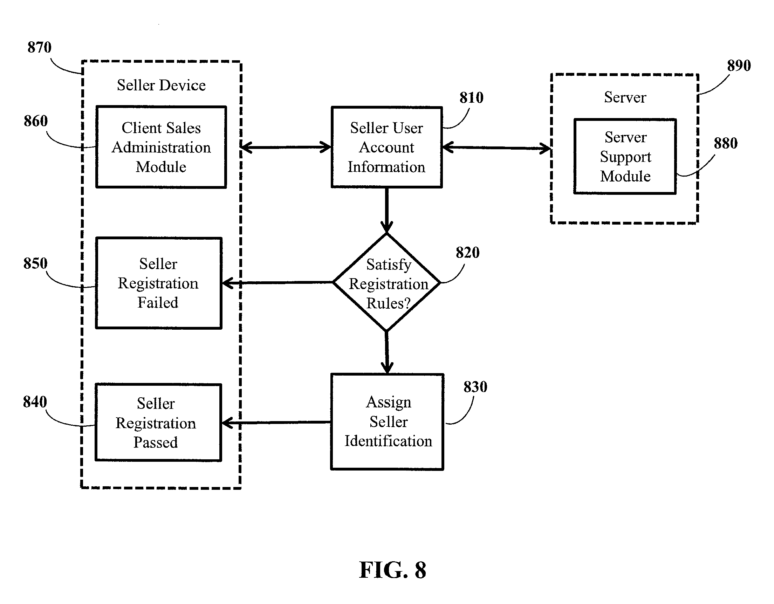

The Server Support module 130 in the server 120 may be configured to provide a number of server support functions in connection with the marketing and sales of products or services.. For example, the Server Support module may receive seller/ user account information from the client device and verify the user account information based on certain rules as shown in FIGs. 7 and 8. The verification of the user account may be done, for example, by verifying the telephone number provided by the user for account registration. The Server Support module may also store the data received by the Server Sales Administration module 140, and perform analytical or statistical operations on the data such as sales analytics.

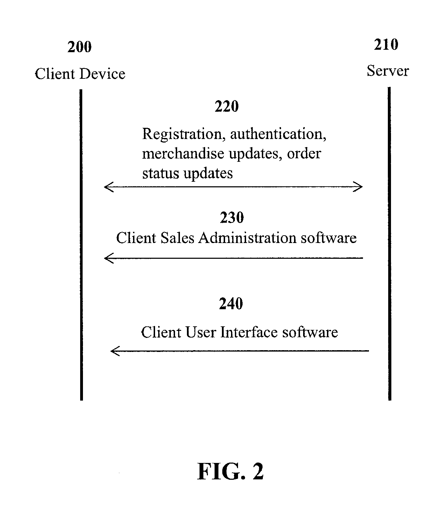

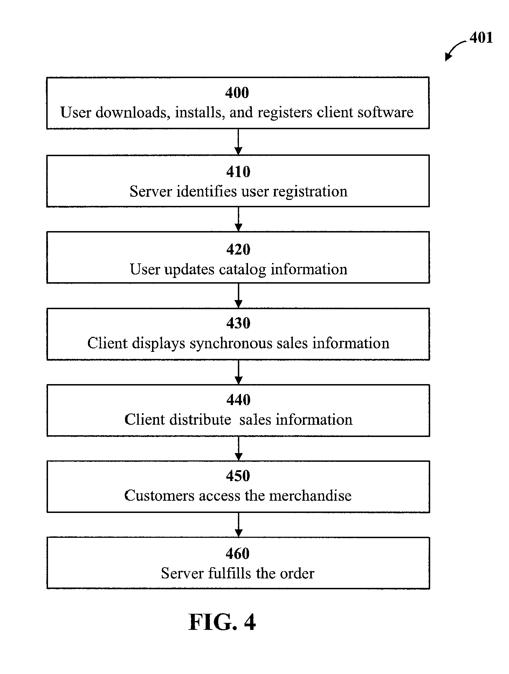

FIG. 2 shows an illustrative diagram of an exemplary communication process between a client device 200 and a server 210 for mobile commerce. A user may download the Client Sales Administration software 230 and the Client User Interface software 240 from the server 210 to the client device 200. The client may also communicate with the server for registration and authentication as well as for updating merchandise information and sales order status as shown in FIGs. 4-7 (message exchanges 220).

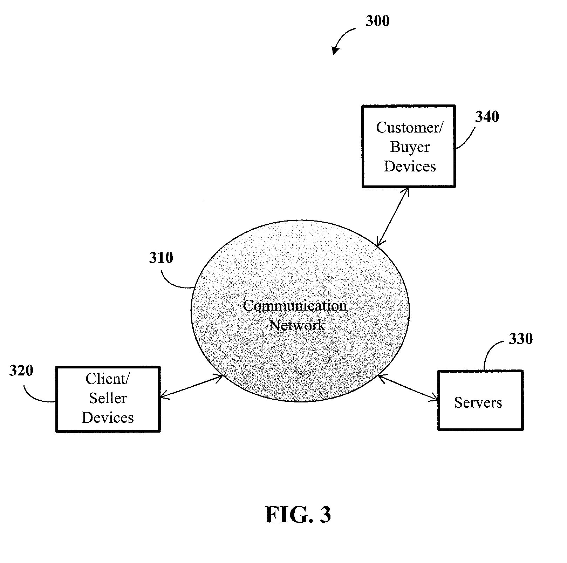

FIG. 3 shows an exemplary communication system 300 in which one or more client devices 320, one or more servers 330, and one or more customer devices 340, communicate via a communication network for mobile commerce 310. The client devices 320 and customer devices 340 can include computers, tablets, mobile devices, or other communication devices, e.g., as described with respect to devices 110 and 160 in FIG. 1. The communication network 310 can include one or more networks such as a mobile broadband wireless network. The Client Sales Administration software residing on the client device may distribute information about the merchandise, represented by hyperlinks or other content links hosted by the server, to social network sites, user groups such as mobile message service users, and other online websites as shown in FIG. 7. The content of the hyperlinks may be provided by the servers 330, and displayed by a customer or buyer in social network sites as a means to access the merchandise.

FIG. 4 shows a flow diagram of an exemplary process 401 of sales and marketing using mobile devices through social network in mobile commerce for a seller mobile device without pre-installed software.

At 400, a seller user may download the Client Sales Administration software and the Client User Interface software to the client device which may be a mobile device. The seller user installs the downloaded software and starts the Client Sales Administration software. The seller user provides user information to register for an account managed by the Server Support software, receives account identification information if registration is approved, or registers again with the correct information if the registration is not approved.

At 410, the Server Support software configures the client user interface for the client sales administration software. The server support software receives and processes the user information for account registration based on certain registration rules. For example, the user information for account registration may be the telephone number attached to the mobile device. If the user information received by the server support software does not satisfy the registration rules, the server support software informs the user that the registration is not successful. If the user information received satisfies the registration rules, the server support software stores the user information, assigns an identification for the user, and informs the user of the identification.

At 420, the seller user updates merchandise, sales, marketing, and catalog information into the Client Sales Administration software through the Client User Interface. The seller user starts the client sales administration module, inspects the current merchandise information stored in the server, such as in a database within or accessible from the server support module, and updates with the new merchandise information. The updated merchandise information may also be sent back to the server from the client device. New merchandise listings may also be created originally on the seller device and optionally saved in the server.

At 430, the client user interface displays data about sales, customers, orders, and other business data, mirroring information in the server sale administration software, i.e., matching the information in the server.

At 440, when there is at least one item in the merchandise database, the client sales administration software may distribute information about the merchandise, represented by hyperlinks, to social network sites, user groups such as mobile message service users, and other online websites. The content of the distributed hyperlinks may be provided by the server, and displayed by a customer or buyer in social network sites as a way to access the merchandise. In some embodiments, the content of the hyperlink may contain one or more merchandise instead of a conventional webpage which contains many merchandise. A single hyperlink may reference one or more than one product. The hyperlink may link to only one item for sale that the seller, the user of the client device, may want to promote. Additionally, the same product may be identifiable with several different links or URLs such that a seller would know which social media website was used by the buyer to access the seller's listing. The flexibility of the social network communication makes it easier to promote or sell only one item, only a few items, or any number of items. As opposed to some traditional websites that are designed to fit all buyers, in the disclosed technology, the seller may target different social network group customers with different marketing messages or different offerings, including, for example, different number of items for sale. The convenience of the seller client mobile device makes the editing and updating easier for the seller/ user, and accessing the items easier for the customer/ buyer. For example, sellers can use built-in mobile phone cameras to take pictures or videos of items they wish to sell or market and make them instantly available to potential buyer in social network sites; similarly, buyers are able to establish a direct communication link with the seller in real time using SMS or other social media applications allowing them to get their questions or counter-offers promptly addressed.

At 450, a consumers or buyers can click on the distributed hyperlinks to access the merchandise and perform operations such as exploring the products or services, making inquiries, ordering, and paying. The consumers or buyers may have received the hyperlinks from the seller or client who sent them from the client mobile device through a social network channel. The customer may access the hyperlinks from another mobile device or terminal, a desktop machine, a tablet, or any existing machine or future developed machine connected to a network. The content for the hyperlink may be stored in the server..

At 460, the server sales administration software receives an order from a consumer or buyer, verifies the payment, and then facilitates order fulfillment, e.g., by providing a message to the seller client device so that a human operator can fulfill the order. The server sales administration software may also store the results of the actions performed by the consumer or buyer in the database in the server such as within the server support module.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, i.e., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

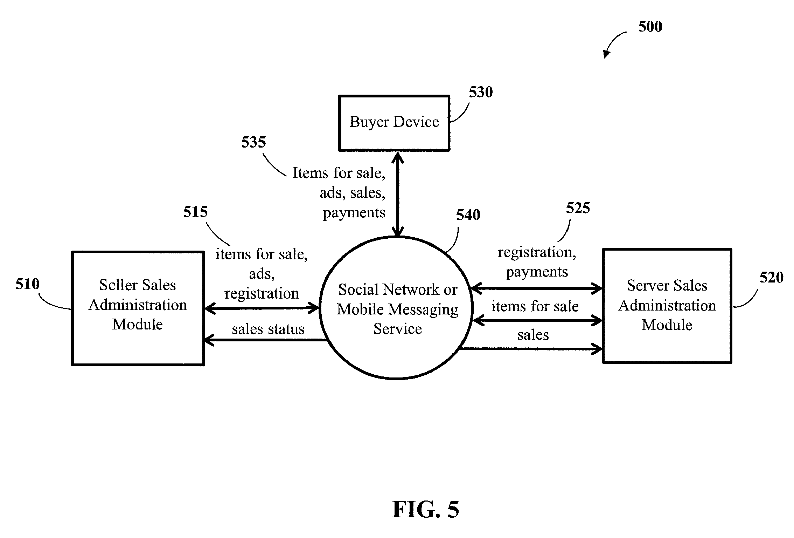

FIG. 5 illustrates examples of communication between the seller sales administration module 510 in the seller device, the server sales administration module 520 in the server, and the buyer device 540 in the social network or through the mobile messaging service 540. Messages 525 show example messages communicated to or from the server sales administration module 520 (e.g., similar to module 140). For items already stored within a database in the server, the item details such as the description and pricing is communicated from the server sales administration module to the seller sales administration module through the communication network, for example, through a mobile messaging service.

Messages 515 show example messages communicated to or from the seller sales administration module 510 (e.g., similar to module 180). In some embodiments, item details may be generated in the seller device and sent from the seller sales administration module to the server for storage.

Messages 535 show example messages communicated to or from the buyer device 530, which may be similar to the buyer device 110 or 340. The buyer device 530 can access the item details through the same communication network, for example, through a social network site or a mobile messaging service. The buyer device is also able to perform actions such as ordering the items, making inquiries on the items, and paying for the items as shown at 535. The buyer actions are communicated through the communication network 540 to the server sales administration module 520 in the server. The seller sales administration module 510 is synchronized to the server sales administration module 520 such that changes in the server sales administration module (such as order status changes), are reflected in the seller sales administration module and may be displayed in the seller user interface.

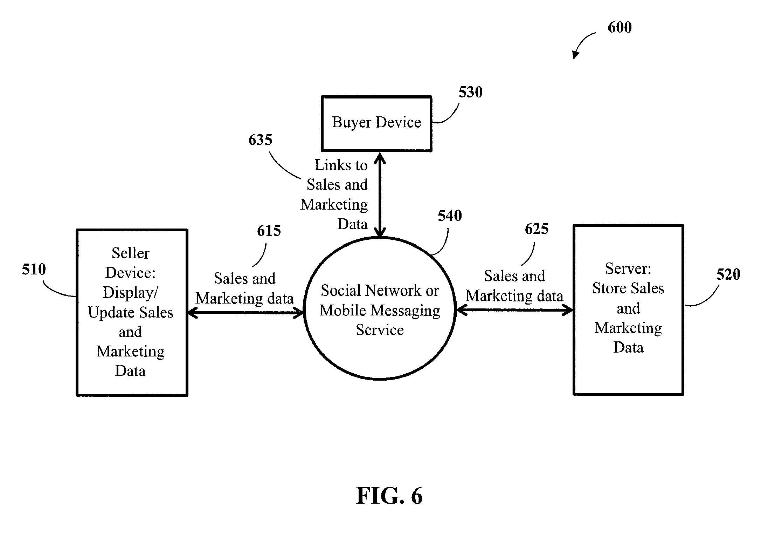

FIG. 6 illustrates an exemplary flow 600 of sales and marketing data between the seller or client device 510, the buyer device 530, and the server 520 through a communication network such as a social network or mobile messaging service 540. Sales and marketing data is generated by the seller device 510 and communicated to the server 520 for storage through the communication network. The seller device may also display or update the sales and marketing data that was previously stored in the server. The buyer device 530 is able to access the sales and marketing data through the communication network such as by accessing hyperlinks received through social network sites or mobile messaging services. The messages 615 represents sales and marketing data communicated to or from the seller device 510. The messages 625 represents sales and marketing data communicated to or from the server 520. The message 635 represents links to sales and marketing data communicated to the buyer device 530.

FIG. 7 illustrates an exemplary interaction between the server 705, the client or seller device 700 and the buyer device 765. At 730, the seller device or user downloads the client sales administration module/ software and client user interface module/software to the seller device from the server. At 740 the seller/ user registers the seller account through the server support module 780 in the server. At 750, once the seller account is registered, using the client/ seller user interface module 710, the seller device can generate sales and marketing information in the client sales administration module 720. This generated sales and marketing information can be sent to the server sales administration module 790 for storage in the server 705. Alternatively, the seller device can display sales and marketing information originally stored in the server, and update and save the information as needed. At 760, links to access the sales and marketing information can be distributed through the communication network, such as social network sites 770, to the buyer device 765.

FIG. 8 illustrates an exemplary flow of seller/ user account registration. At 810, the seller sends seller account information through the client sales administration module 860 to the server support module 880 in the server 890. At 820, the server support module compares the user information received for account registration against certain registration rules. At 850, if the seller registration does not satisfy the registration rules, the account registration fails and the seller is so notified on the seller device 870. At 840, if the seller registration satisfies the registration rules, the account is registered and the seller is assigned with an identification 830.

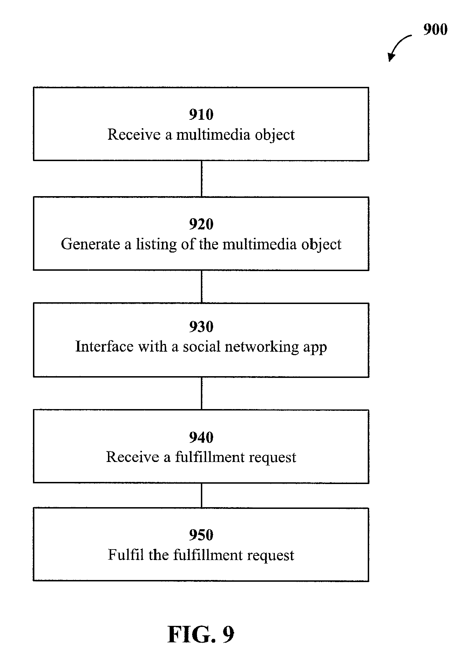

FIG. 9 illustrates a flow diagram of an exemplary process 900 for listing items for sale on social networking sites and online ecommerce websites.

The method 900 includes, at 910, receiving, at a seller mobile device, a multimedia object representing an item for sale, rent, or donation. The multimedia object may capture a video or a picture of an object for sale, e.g., a bicycle or a textbook. In some embodiments, the multimedia object itself may have value, e.g., a news photograph, or a "do it yourself" instruction video, etc.

The method 900 includes, at 920, generating a listing of the multimedia object by associating listing information received from a user interface of the seller mobile device with the multimedia object.

The method 900 includes, at 930, interfacing, without additional user interaction, with a first social networking application installed on the seller mobile device to cause the listing of the multimedia object to be propagated as being available to other users of a first social media network served by the first social network application.

The method 900 includes, at 940, receiving, from the first social networking application, a fulfilment request for the listing of the multimedia object. In some embodiments, the fulfilment request may include ordering to receive an item that is captured by the picture or video that makes up the multimedia object. In some embodiments, the fulfilment request may include an inquiry about availability, or a comment about the product being offered, or another item related to the multimedia object.

In some embodiments, the method 900 includes automatically identifying the received multimedia object, automatically associating with the multimedia object similar items for sale, rent, or donation in the social network site or another online ecommerce websites, and automatically adding at least some of the listing information based on the automatic association. The method may further include automatically adding to the listing a pre-determined percentage discount from a pricing of the similar items.

The method 900 includes, at 950, fulfilling the fulfillment request using the received multimedia object at the seller mobile device.

In some embodiments, the seller mobile device may also include a second social network application installed on the seller mobile device. The method 900 may include interfacing, without additional user interaction, with the first social networking application installed on the seller mobile device to cause the listing of the multimedia object to be propagated as being available to other users of the second social media network served by the second social network application.

In some embodiments, the seller mobile device may capture and log the received fulfillment requests and the corresponding action taken for billing. The generated accounting information about the fulfillment request may transfer the accounting information an accounting server. In some embodiments, e.g., when auction is being conducted and a highest bid wins, the listing of the multimedia object may by updated based on the received fulfillment request.

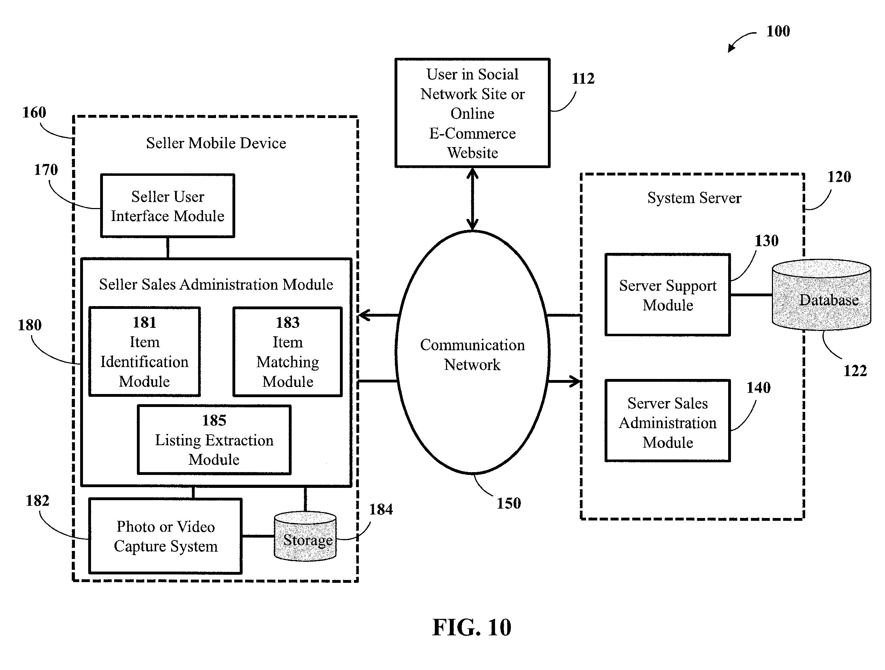

In some exemplary embodiments of the disclosed technology the seller sales administration module automatically identifies the photo or video captured at 910 and automatically associates it with similar items for sale, rent, or donation in social networking sites or in online ecommerce websites. The seller sales administration module may allow the seller to accept or reject the automatic identification of the item or to narrow down potential item categories thereby assisting the seller sales administration module in making the automatic identification. In some aspects of the disclosed technology this automatic identification is accomplished by the seller sales administration module processing the image (or extracting an images from the video and processing such extracted images) and comparing the image or images against a database of images either on the server (FIG. 10 at 122), on the seller device, or on a third party database. In other aspects of the disclosed technology the image captured will display the items bar code, model, brand, or other element of the item that is customarily used to identify the item in commerce, and the seller sales administration module would thereby identify the item thus.

In other exemplary embodiments of the disclosed technology the seller sales administration module can automatically add listing information based on the automatic associations or other automatically identified condition of the item. For example, if the item for sale is a used item, the seller sales administration module might be able to determine the used condition such as "acceptable", "like new", "good" or other predetermined condition metric, by automatically detecting such things as how many chips the item has, if the item is missing some parts or components, or the extent of visible signs wear and tear, among other visually identifiable conditions. In other aspects the listing information could be downloaded from product identification databases. For example, once the Universal Price ode (UPC) for an item is automatically identified, the seller sales administration module could pull the product information directly from a UPC database or from a database made available by the item's manufacturer and populate the listing fields for that item in the seller sales administration module with the same.

In other exemplary embodiments the seller sales administration module can optionally automatically list the item to a social networking site or an online ecommerce website at a pre-determined percentage discount from the price of the similar items. For example, a seller could program the seller sales administration module to list items at 10% off the lowest price on a given social network site or ecommerce website (or 10% off the lowest price from a group of social network sites or ecommerce websites). The seller sales administration module would then sample the pricing of the same item in the predefined sites (or if no comparison sites are predefined, it could sample from a subset of popular sites), determine what the lowest price is, set the listing price to a certain predefined percentage of this lowest price, and list the item at such price.

FIG. 10 illustrates an exemplary mobile commerce system 100 which includes a seller mobile device 160, a buyer in social network site or on an online ecommerce website 112, a server 120 with an internal or external database 122, and a communication network 150. The seller mobile device 160 can communicate with the buyer in a social network site or a buyer in an online e-commerce website 112 and to a system server 120 through a communication network 150. This communication network can include Wi-Fi, LTE, WiMAX, HSPA, EDGE, or other communication network for mobile devices. The seller mobile device can also include an in-built camera and video capturing system 182. This allows the seller, renter or donor to take photos or videos or items they wish to list and, as described below, list the item directly to social networking sites or online e-commerce websites with just a few clicks. Such "one-click" selling differs from existing systems and methods that require numerous and elaborate steps before a mobile device user can list their item to social network sites or online e-commerce websites.

The seller mobile device also includes a seller sales administration module 180, that is configured to interface with the in-built camera and the in-built video system 182 and with the seller mobile device's internal or external storage system 184 where photos or videos could be stored. The seller sales administration module allows for editing the captured pictures or videos and the addition of listing information such as item price, quantity on hand, quality, description of the item, among numerous other listing information. The mobile device user may enter the listing information via the seller user interface module 170. In other exemplary embodiments, the listing information is automatically appended to the listing as described below.

The seller sales administration module is further configured to deliver, through the communication network 150, the captured pictures or videos and the listing information to a social networking site or an online ecommerce website 112, and to receive, through the communication network, actions relating to the captured pictures or videos and the listing information from users of the social networking site or the online ecommerce website 112.

In some exemplary embodiments the camera or video capturing system 182 might not be integrated into the seller mobile device 160 but may be external to it. In other exemplary embodiments the seller mobile device might not include a camera or video system altogether but may have a means to receive photos or videos of items and after storing such pictures or videos to the mobile device's internal or external storage system 184, performing the actions described previously as if the photos or videos were captured by the seller mobile device.

In other exemplary embodiments the seller sales administration module 180 may further comprise other modules for autonomous operation. For example, an item identification module 181 could include software to automatically identify the item captured by the photo or video capture system 182, or an item's photo or video stored in the mobile device's internal or external storage 184. In some embodiments this identification process could be fully automatic or may be user-assisted in other embodiments. For example, the seller could narrow down the list of potential items or categories of items that the photo or video could represent and the seller sales administration module, in conjunction with an internal or external item database 122 (or an external third party service) could determine the exact brand and model of the item. In other embodiments, the identification process could be substantially more automatic. For example, the seller sales administration module 180 could identify the item by the items physical appearance and features (e.g., when listing apparel such as clothing, furniture, or other items whose exact brand may not matter) or could be by capturing objects on the item designed to identify the item in commerce (e.g., brand labels, UPC codes, name and model numbers, or other identifying marks).

An item matching module 183 coupled to the item identification module 181 could associate the automatically identified item to similar items listed in social networking sites or online ecommerce websites. For example, it could capture what the item's SKU number was on an ecommerce website, e.g., what the Amazon Standard Identification Number (ASIN) was.

A listing extraction module 185 coupled to the item matching module 183 could extract listing information from the similar items and associate that listing information with the seller's item in the seller sales administration module 180. For example the listing extraction module 185 could extract the listing price of the similar item, how many of the item were available for sale, what the associated shipping rates were to select destinations, the popularity of the item (such as how many likes it had received on social network sites like Facebook), among other information of the item that could be available on social network sites and online e-commerce websites.

In other exemplary embodiments the automatic matching of the item with similar items online may be independent of the automatic identification of the item from captured pictures or videos. That is, some embodiments could have the item matching module 183 and the listing extraction module 185 without the item identification module 181. In these exemplary embodiments the mobile device user could manually identify the item with the brand, model, UPC, or other appropriate identification method, and the item matching module 183 and listing extraction module 185 in the seller sales administration module 180 could connect to social network sites or online ecommerce websites to download the associated listing information.

In other exemplary embodiments, the seller sales administration module 180 could automatically list the item to a social networking site or an online ecommerce website at a pre-determined percentage discount computed from the price of the similar items. For example, the mobile device user could preset what percentage discount to offer his or her listings for and the seller sales administration module could identify the lowest price in various social network sites or ecommerce websites and calculate the corresponding listing price.

In some embodiments, a method of mobile commerce includes displaying sales and marketing data on a seller mobile device, wherein the data is received from a server, updating sales and marketing data on the seller mobile device, sending the updated sales and marketing data to the server, distributing links to the sales and marketing data to buyer devices via a social network or mobile messaging service. The method may be implemented on a seller mobile device such as a smartphone or a tablet computer. The sales and marketing data may be pushed to the social networking sites using the automatic interfacing to social media apps on the seller mobile device.

In some embodiments, a method of enabling a mobile device to perform sales transactions includes downloading a client sales administration module and a client user interface module from a server, registering an account managed by a server support module in the server, displaying sales and marketing information from a server sales administration module in the server, updating sales and marketing information in the client sales administration module through the client user interface module, and distributing links to the sales and marketing information to social networking sites. In some embodiments, the operation of registering the account includes seller sending user account information to the server support module, and the server support modules receiving and processing the user information. In some embodiments, the operation of receiving and processing the user information includes verifying if the user information satisfies a registration rules, informing the seller that the registration was not successful if the user information does not satisfy the registrations rules, and assigning an identification for the seller, and informing the seller of the identification, if the user information satisfies the registration rules. In some embodiments, the operation of updating sales and marketing information in the client sales administration module further comprises sending the updated sales and marketing information to the server.

In some embodiments, an apparatus includes a network interface for communication via a communication network, an image capture system for capturing and storing pictures or videos and a processor configured to interface with the image capture system, edit captured images, deliver, through the communication network, the captured and edited images to a social networking site or an online ecommerce website, receive, through the communication network, actions relating to the captured and edited images from users of the social networking site or the online ecommerce website, and perform, when permitted, the received actions on the multimedia object. The processor may be configured to implement the operations described with respect to FIG. 9.

It will be appreciated that techniques for enabling sale of an item on a user's multiple social networks by simultaneously advertising the item, or service, for sale by providing application programming interfaces (APIs) to the social media applications installed on the user device itself.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes, modules and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

While this patent document and attached appendices contain many specifics, these should not be construed as limitations on the scope of any disclosed methods or of what may be claimed, but rather as descriptions of features that may be specific to particular embodiments of particular disclosed methods. Certain features that are described in this patent document and attached appendices in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document and attached appendices should not be understood as requiring such separation in all embodiments.

Only a few implementations and examples are described and other implementations, enhancements and variations can be made based on what is described and illustrated in this patent document and attached appendices.

## Claims

1. A method for mobile commerce comprising:
receiving, at a seller mobile device, a multimedia object representing an item for sale, rent, or donation;
generating a listing of the multimedia object by associating listing information received from a user interface of the seller mobile device with the multimedia object;
interfacing, without additional user interaction, with a first social networking application installed on the seller mobile device to cause the listing of the multimedia object to be propagated as being available to other users of a first social media network served by the first social network application;
receiving, from the first social networking application, a fulfilment request for the listing of the multimedia object; and
fulfilling the fulfillment request using the received multimedia object at the seller mobile device.

2. The method of claim 1 wherein the fulfillment request comprises at least one of ordering, inquiring, commenting, and linking to other detailed listings.

3. The method of claim 1 further comprising:
automatically identifying the received multimedia object;
automatically associating with the multimedia object similar items for sale, rent, or donation in the social network site or another online ecommerce websites; and
automatically adding at least some of the listing information based on the automatic association, and, optionally;
automatically adding to the listing a pre-determined percentage discount from a pricing of the similar items.

4. The method of claim 1, wherein the multimedia object comprises a video capture of the item for sale that is captured by the seller mobile device.

5. The method of claim 1, wherein the seller mobile device includes a second social network application installed on the seller mobile device, the method further including:
interfacing, without additional user interaction, with the first social networking application installed on the seller mobile device to cause the listing of the multimedia object to be propagated as being available to other users of the second social media network served by the second social network application.

6. The method of claim 1, wherein the fulfilling the fulfillment request includes transmitting the multimedia object to a device that originated the fulfillment request.

7. The method of claim 1, further comprising:
generating accounting information about the fulfillment request; and
transferring the accounting information to an accounting server.

8. The method of claim 1, further comprising:
updating the listing of the multimedia object based on the received fulfilment request.

9. A system for providing mobile commerce, comprising:
a communication network;
a seller device operable in the communication network and comprising a seller sales administration module that manages information on products or services offered for sale, and manages information on marketing and advertisement of the offered products or services, the seller sales administration module configured to deliver, through the communication network, the information on products or services and the information on marketing and advertisement via a social network service or a mobile messaging service;
one or more servers in the communication network configured to include a server sales administration module for managing sales, including storing information on the products or services offered for sale, processing sales transactions, managing buyer registration and authentication, and processing buyer payment; and
a buyer device operable in the communication network to receive marketing and advertisement of the products or services from the seller device via the social network service or the mobile messaging service, the buyer device operable to place an order and make a payment for the placed order in interaction with the server sales administration module.

10. The system in claim 9, wherein the seller device further comprises:
a seller user interface module that interacts with the seller sales administration module to allow for the displaying and updating of the products or services.

11. An apparatus, comprising:
a network interface for communication via a communication network;
an image capture system for capturing and storing pictures or videos; and
a processor configured to interface with the image capture system, edit captured images, deliver, through the communication network, the captured and edited images to a social networking site or an online ecommerce website, receive, through the communication network, actions relating to the captured and edited images from users of the social networking site or the online ecommerce website, and perform, when permitted, the received actions on the multimedia object.

12. The apparatus in claim 11, wherein the processor is further configured to:
automatically identify the received multimedia object;
automatically associate with the multimedia object similar items for sale, rent, or donation in the social network site or another online ecommerce websites;
automatically add at least some of the listing information based on the automatic association.

13. The apparatus of claim 11, wherein the multimedia object comprises a video capture of the item for sale that is captured by the seller mobile device.

14. The apparatus of claim 11, wherein the seller mobile device includes a second social network application installed on the seller mobile device, wherein the processor is further configured to:
interface, without additional user interaction, with the first social networking application installed on the seller mobile device to cause the listing of the multimedia object to be propagated as being available to other users of the second social media network served by the second social network application.

15. The apparatus of claim 11,
wherein the fulfilling the fulfillment request includes transmitting the multimedia object to a device that originated the fulfillment request; or
wherein the processor is further configured to:
generate accounting information about the fulfillment request; and
transfer the accounting information to an accounting server; or
wherein the processor is further configured to:
update the listing of the multimedia object based on the received fulfilment request.
